Europäisches Patentamt

(19) European Patent Office

Office européen des brevets

(11) Publication number: **0 297 603**
**B1**

# EUROPEAN PATENT SPECIFICATION

(45) Date of publication of the patent specification:
**10.10.90**

(21) Application number: **88110560.5**

(22) Date of filing: **01.07.88**

(51) Int. Cl.⁵: **G06K 15/12**

(54) Checking a device having a plurality of light emission elements.

(30) Priority: **02.07.87 JP 165794/87**
**14.07.87 JP 175580/87**

(43) Date of publication of application:
**04.01.89 Bulletin 89/1**

(45) Publication of the grant of the patent:
**10.10.90 Bulletin 90/41**

(84) Designated Contracting States:
**DE FR GB**

(56) References cited:
**WO-A-87/02162**

(73) Proprietor: **FUJITSU LIMITED, 1015, Kamikodanaka Nakahara-ku, Kawasaki-shi Kanagawa 211(JP)**

(72) Inventor: **Horiuchi, Mamoru FUJITSU LIMITED, Patent Department 1015 Kamikodanaka Nakahara-ku, Kawasaki-shi Kanagawa 211(JP)**
Inventor: **Wada, Yoshinori FUJITSU LIMITED, Patent Department 1015 Kamikodanaka Nakahara-ku, Kawasaki-shi Kanagawa 211(JP)**
Inventor: **Shimizu, Hirotoshi FUJITSU LIMITED, Patent Department 1015 Kamikodanaka Nakahara-ku, Kawasaki-shi Kanagawa 211(JP)**
Inventor: **Uehara, Yuji FUJITSU LIMITED, Patent Department 1015 Kamikodanaka Nakahara-ku, Kawasaki-shi Kanagawa 211(JP)**
Inventor: **Wanou, Masahiro FUJITSU LIMITED, Patent Department 1015 Kamikodanaka Nakahara-ku, Kawasaki-shi Kanagawa 211(JP)**
Inventor: **Kimura, Masatoshi FUJITSU LIMITED, Patent Department 1015 Kamikodanaka Nakahara-ku, Kawasaki-shi Kanagawa 211(JP)**

(74) Representative: **Sunderland, James Harry et al, HASELTINE LAKE & CO Hazlitt House 28 Southampton Buildings Chancery Lane, London WC2A 1AT(GB)**

## Description

The present invention relates to the checking of a device which comprises a plurality of light emission elements. For example, it provides a method for checking and regulating the emission characteristics of elements in a light emission array used for an electronic printer.

Some recent printing machines, copying machines and display equipment use pluralities of light emission elements arranged in arrays. For example, in an electronic printer using electrophotography technology, about 2,800 light emission elements are aligned with a pitch of 105 units per cm on a line about 30 cm long. These light emission elements might be provided by laser diodes, light emitting diodes (LED) or by a liquid crystal shutter (LCS) array. LED arrays are becoming most significant for such applications because of their cost and quick response. In the following description relating to the present invention, reference will be made primarily to LED arrays applied to electronic printers. However, application of the present invention is not limited to linear LED arrays for electronic printers. The present invention can be applied to devices which have pluralities of light emission elements arranged in two dimensional matrices such as in a planar solid state display device, for example. The light emission elements may be of suitable kind. The elements may themselves emit light (e.g. LEDs or laser diodes) or may be such as to control emission (transmission) of light from a separate source of light (e.g. liquid crystal shutters).

In an LED array for an electronic printer a plurality of LEDs are arranged along a line, each LED having a size corresponding to the size of a picture element, with a pitch as appropriate for providing a necessary image resolution. It is important to check the light emission condition of the LEDs. If even one LED of the array is non-operational or degraded, the image obtained from the LED array will be marred by a line defect.

Further, it is necessary that the brightness of each LED be within a predetermined tolerance range, in order to obtain a uniform output image. Therefore, in a practical electronic printer, the LED array is checked and the emission characteristic of each LED element adjusted, before the array is installed into the printer. In some electronic printers, there are provided control circuits for controlling the amplitude or pulse width of signals used to drive each of the LEDs, so as to provide compensating adjustment of LED brightnesses, to bring them within tolerances. This is carried out by measuring the light emission characteristics of each LED, one LED at a time, and memorizing the LED characteristics in a memory device provided in the printer device. An amplifier for driving the LEDs is adjusted to vary its output pulse width or current amplitude in dependence upon the memory contents. Measurement and memorizing are effected before the LED array is built into the printer device. More detail is disclosed in, for example, "High Printing quality LED Printhead" by I. Abiko et al., Journal of Image Technology, pages 296-299, Vol. 12, No. 5, October 1986, Society of Photographic Scientists and Engineers, or in USP 4,455,562, June 19 1984, by D. T. Dolan, "Control of Light Emitting Diode Array".

Even when such correction is effected, there still remains a problem. At the beginning of operation, the output image may be fine, but image quality is subject to degradation or failures if the LED elements degrade or fail during operation. Since there is no way to forecast the failure of each individual LED element, the LED array is replaced or amended after a number of defects have appeared in the output image. Or, in cases when it is extremely important to avoid output image defects, the LED array is replaced before its total operation time exceeds an average life.

WO 87/02162 discloses an electro-photographic printer which contains an exposure energy correction device for the optical character generator which has a row of lightemitting diodes. When an adjusting routine is called up the light-emitting elements are automatically adjusted by the fact that a photographic element detects the radiant output transferred to the recording support in preset standard operating conditions from each light-emitting element and transmits this to a control device coupled with the light-emitting element in the form of electrical signals. The program/controlled device then allocates to each light-emitting element an individual operating time and stores this in a switching time memory. As a result, each light-emitting element supplies the same radiant energy to the recording support when it is operated.

The photographic (photodetector) element is located in the immediate neighbourhood of the recording support, the target of the light from the light-emitting diodes, so that all effects acting on the path of light from the diodes to the recording support, including self-focussing optics for instance, are included. The photodetector element is mechanically moved into the path of light from the diodes to the recording support, i.e. directly in the path of the light to the target.

As an additional measure, in order to provide some indication of performance without bringing the photodetector into the path between the diodes and the recording support, additional light-emitting diodes are provided together with an additional photodetector, monitoring only the light from these additional diodes, which play no part in producing an image on the recording support. On the basis that the additional diodes will be subject to the same ageing process as the diodes used for image-forming this allows a kind of statistical assessment of the Likely behaviour of the main diodes.

According to the present invention there is provided apparatus including:a light emission arrangement, comprising a plurality of elements each operable to provide for controlled light emission; driving means, for driving each of the plurality of elements to provide controlled light emission; a target object, towards which light emission is directed; and means for checking the functioning of the elements of the plurality in situ, comprising :a test generator, operable to generate pulses for causing all of the elements of the plurality to provide light emissions, one by one, each element in turn, detector means, operable to detect light emissions provided from any of the elements of the plurality and to provide output signals dependent upon the intensities of the detected emissions, and processing means, operable to process output signals from the detector means to provide data representing functional characteristics of each of the elements of the plurality, characterised in that the detector means are positioned outside of the path of light emission from the light emission arrangement to the target object.

According to the present invention there is provided apparatus including:a light emission arrangement, to comprising a plurality of elements each operable to provide for controlled light emission; driving means, for driving each of the plurality of elements to provide controlled light emission; a target object, towards which light emission is directed; and means for checking the functioning of the elements of the plurality in situ, comprising: a test generator, operable to generate pulses for causing all of the elements of the plurality to provide light emissions, one by one, each element in turn, detector means, operable to detect light emissions provided from any of the elements of the plurality and to provide output signals dependent upon the intensities of the detected emissions, and processing means, operable to process output signals from the detector means to provide data representing functional characteristics of each of the elements of the plurality, characterised in that the detector means are translucent and that light in the path of light emission from the light emission arrangement to the target object passes through the detector means.

Embodiments of the present invention provide for the checking of the characteristics of each of a plurality of light emission elements arranged in a device, with the elements mounted in the device, without disturbing operation of the device.

Embodiments of the present invention can provide for the checking of the characteristics of a light emission array mounted in electronic printer, whilst the printer is in operation or during a short time period between operations, without removing the array from the printer.

Embodiments of the present invention can provide for improvement in output image quality, and increase the reliability of a device using plurality of light emission elements aligned in a group to output the image.

In an embodiment of the present invention each of light emission elements is checked but the number of detectors used is less than the number of light emission elements. Preferably only one detector is used for checking all the light emission elements.

In an embodiment of the present invention each of a plurality of light emission elements in an array is excited in turn, so the elements are excited one by one, with a sequence of pulses. The light emission from each element is detected by a detector which is designed to receive all emissions from the plurality, which preferable comprehends the entire array. The output of the detector becomes a pulse train. Each pulse represents the characteristic of a corresponding light emitting element. The amplitudes of the received pulses are fed back to an amplifier which drives the light emitting elements, to homogenize the output light intensity. Therefore the quality of the output image of the device is increased.

Deterioration of light emitting elements can be anticipated from changes of output pulses. When a change in an output pulse exceeds a predetermined tolerance, the corresponding element can be replaced before it fails. This provides for improved device reliability and enables the use of the light emission elements until the real end of their useful lives.

Measurement is carried out without removing the light emission array from the device, and by properly picking up light from the array operation of the device is not disturbed. Since measurement can be effected very quickly, it can be carried out during a short time period, such as a period in which for paper is fed to an electronic printer for printing a new page.

By the provision of means for checking each light emission element during operation (or in a short time interval between operations of an electronic printer, for example during a paper feed time period) significant improvements in quality, reliability, and maintainability of the device using such light emitting elements can be achieved.

Reference is made, by way of example, to the accompanying drawings, in which:

Fig. 1 is a schematic diagram illustrating parts of an electronic printer to which an embodiment of the present invention can be applied;

Fig. 2 is a schematic diagram illustrating in outline how light intensity of light emission elements of an array is measured, and the measurements fed back to the elements to adjust light emission;

Figs. 3 illustrate a photodetector suitable for employment in accordance with an embodiment of the present invention, wherein:-

Fig. 3(a) is a schematic perspective view showing components of the photo detector;

Fig. 3(b) is a schematic perspective view of the assembled detector; and

Fig. 3(c) is a cross-sectional view of the photo detector, illustrating detailed structure thereof;

Fig. 4 illustrates schematically one way in which light can be picked up from the light path in an electronic printer;

Fig. 5 illustrates schematically another way in which light can be picked up, using reflection from a photoconductor drum of an electronic printer;

Fig. 6 illustrates a third way in which light can be picked up, in which a high-sensitivity photo detector is positioned alongside the light path;

Fig. 7 illustrates a fourth way in which light can be picked up, using a translucent photo detector positioned in the light path;

Fig. 8 illustrates a further way in which light can be picked up, using a light conducting fiber, wherein:

Fig. 8(a) is a front view of the light pick-up arrangement; and

Fig. 8(b) is a side view of the arrangement;

Fig. 9 is a schematic, partially cut-away view illustrating configuration and positioning of major parts of an electronic printer to which an embodiment of the present invention is applied;

Fig. 10 is a block circuit diagram of circuitry for checking light emitting characteristics of each LED of an array in an electronic printer, in accordance with an embodiment of the present invention;

Fig. 11 is a block circuit diagram of circuitry for regulating the emissions of LEDs, using checking data obtained by measurement in accordance with an embodiment of the present invention; and

Fig. 12 is a schematic circuit diagram of an example of a digital controlled amplifier applicable to the circuit of Fig. 11.

Throughout the Figures, the same or similar reference numerals are used to designate the same or similar parts.

The description is given primarily with reference to an electronic printer using an LED array. However, it will be clear that embodiments of the present invention may be applied in any type of device using a plurality of light emission elements arranged in a group. The light emission elements need not themselves emit light: they may control light from a light source, for example as in a combination of a light source and an array of liquid crystal shutters (LCS).

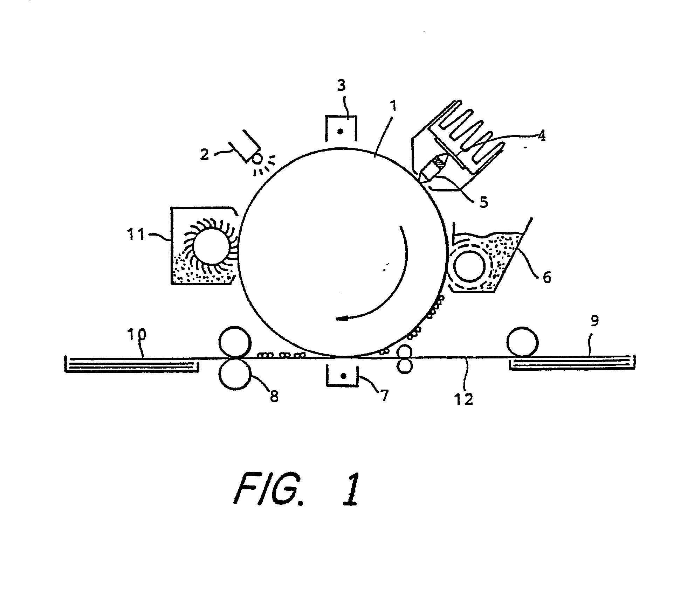

Fig. 1 illustrates schematically the main parts of an electronic printer. The printer has a rotating drum covered with photoconductor 1, which becomes conductive when it is irradiated with light. The drum is rotated in a direction indicated by an arrowed line. A discharger 2 sweeps out surface charges on the surface of the photoconductor 1 by irradiating it with light. The surface of the photoconductor 1 is uniformly charged up to a few hundred volts by a precharger 3. Then, a desired image is projected onto the photoconductor 1 by an LED array 4, which is provided with a self-focusing lens array 5. Irradiated parts of the photoconductor become conductive and so discharge their surface charge, leaving charge in place corresponding to other portions of the image. So, a latent image composed of electric charge is provided on the surface of the photoconductor 1. When the latent image arrives at a developer section 6, toner in the developer is attracted by the charge of the latent image, and adheres on the surface of the photoconductor, changing the latent image to a visible one. The visible image is transferred to a paper sheet 12 by a transfer charger 7, which provides the paper with an opposite voltage charge to that of the toner and attracts the toner from the photoconductor 1 to the paper 12. The paper 12 is fed from a paper hopper 9 and filed on a paper stacker 10. Before that, the toner on the paper 12 is melted and fixed on the paper by a fixer 8, so the image is fixed on the paper 12. 11 is a cleaner which wipes remaining toner from the photoconductor.

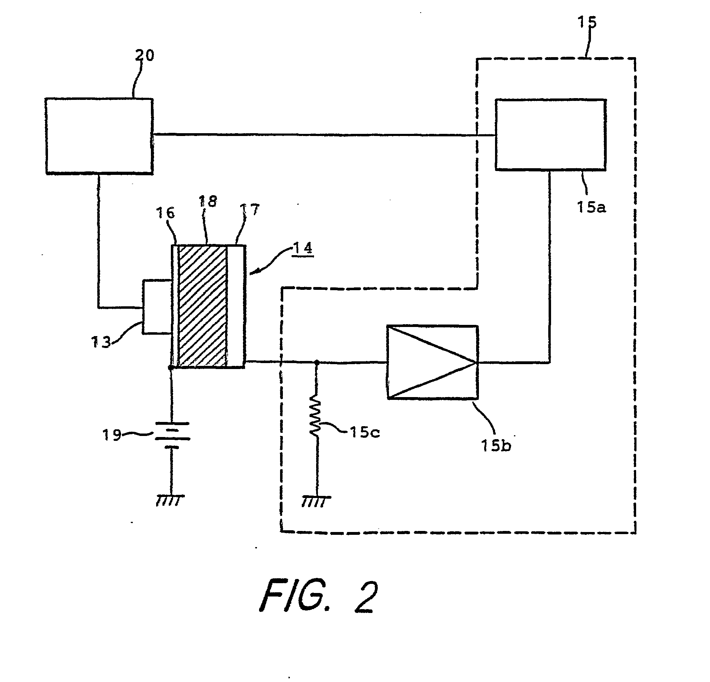

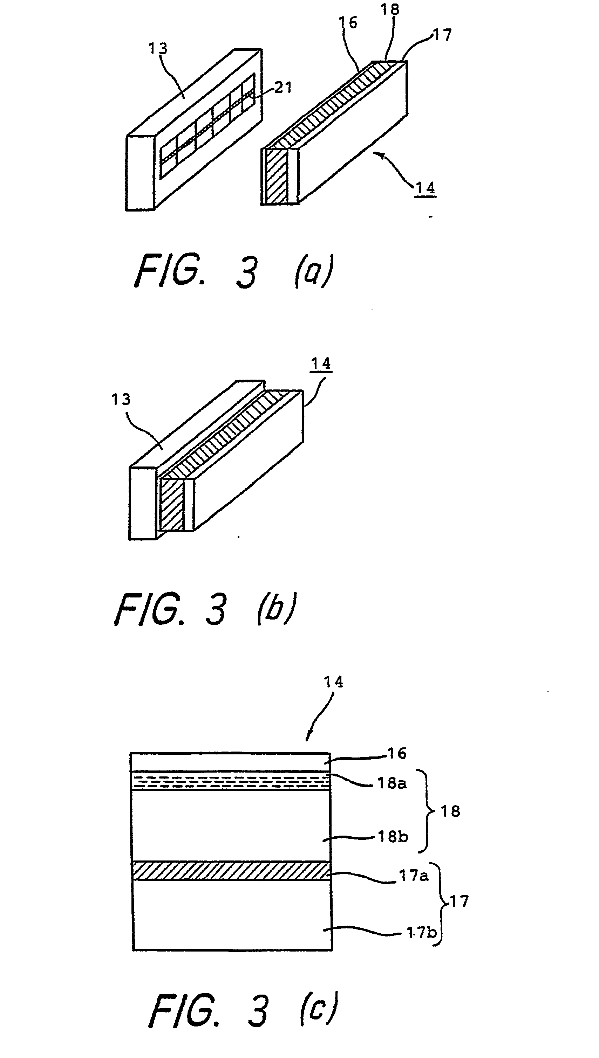

First, a method of checking the LEDs in an LED array, in accordance with an embodiment of the present invention, will be described in outline referring to Figs. 2 and 3. Fig. 2 is a block diagram for illustrating the measurement method and arrangement employed, and a feedback system for adjusting the emission properties of the LEDs. Light emitted from an LED array 13, comprising a plurality of LEDs, is detected by a photoelectric detector 14 and thereby converted to an electronic signal. A measuring means 15 comprises a resistor 15c, an amplifier 15b and a voltage detector 15a. The photoelectric detector 14 comprises a photoconductor 18 sandwiched between a front electrode 16, and a back electrode 17. Between these electrodes an electric potential is applied by a voltage source 19 through the resistor 15c and ground.

The front electrode 16 is a transparent electrode made from indium tin oxide (ITO) for example. When an LED of the array 13 emits light, the photoconductor layer 18 becomes conductive, and current flows between the front and back electrodes. The current is converted into voltage variation by the resistor 15c, and this voltage variation is amplified by the amplifier 15b and detected by the voltage detector 15a. This voltage is fed back to a driving circuit 20 which drives the LEDs, thereby to adjust LED emission.

In order to apply a method embodying the present invention involving the use of only a single photoelectric detector, it is necessary to detect emissions from any one of the LED elements of the array with the single photoelectric detector. The reasons will become apparent from the description below.

Fig. 3 is a schematic perspective view illustrating a photoelectric detector, suitable for use in an embodiment of the present invention. 13 is an LED array illustrated schematically. The LED array 13 has plurality of LED elements 21 arranged on a line.

In Fig. 3(a),14 designates the photoelectric detector. The photoelectric detector 14 is composed of a photoconductive layer 18 sandwiched between a transparent front electrode 16 and a back electrode 17. A feature of this photoelectric detector 17 is that it has a size sufficient to cover the entire length of the LED array 13, when it is attached to the LED array as seen in Fig. 3(b). A detailed structure of the photoelectric detector 14 is illustrated in Fig. 3(c), which shows a cross-section of the detector. The back electrode is composed of an aluminium electrode 17a 0.5 μm thick with is evaporated on a glass substrate 17b. The photoconductor of this embodiment is a double layer; a selenium layer 18b 20 μm thick and a selenium telluride layer 18a 2 μm thick. These two layers are deposited on the aluminium back electrode 17a, and over the selenium telluride layer 18a the transparent front electrode 16 is formed of ITO 0.2 μm thick.

The materials and structure of such a photoelectric detector are well-known so further description will be omitted. Embodiments of the present invention may employ photoelectric detectors other than that of Figs. 3. So long as the detector responds to the wavelength of light emitted by the LEDs, and its size or effective field of view or field of capture covers the entire length of the LED array, the detector may be of any type and material, for example, it may be a photovoltaic device like a solar cell, or a photoconductive device using cadmium telluride, and so on.

As can be seen in Fig. 3, if the photoelectric detector 14 is attached to the LED array 13, it catches the light from any of the LED elements 21 in the LED array 13. Therefore, if the driving circuit 20 in Fig. 2 drives the LEDs one by one with respective pulses, the output of the photoelectric detector 14 becomes a sequence of pulses. In this sequence, for example, a first output pulse corresponds a first LED, a second pulse corresponds the second LED, and so on. So, if there is a difference between the emission characteristics of LEDs, each of the output pulses represents the emission characteristic of the corresponding LED. It will be understood by one skilled in the art that measurement can be effected within a very short period, less than a second. Of course, the period needed depends on the total number of the LEDs. The output voltage of the measuring means 15 is fed back to the driving circuit to adjust the driving pulses of the LEDs. The feedback is effected by adjusting the voltage or pulse width for each of the LED elements to compensate for variations in emission properties, according to the output value of the voltage detector 15a.

By such measurement, variation in the emission properties of the LED elements can be automatically compensated (brought within tolerances) quickly and easily. Further, from the output voltage of the voltage detector 15a, it is possible to recognise degradation of LED elements. Namely, if the output level of the n-th pulse decreases, this means that the n-th LED has degraded in some way. If the degradation exceeds a predetermined limit, the relevant element of the array should be repaired. This greatly facilitates maintenance of the device.

In the above embodiment, measurement of emissions is effected by attaching the photoelectric detector 14 closely to the LED array 13. However, by properly modifying the principle described above, it becomes possible to measure the LED array using a variety of other arrangements, using modified methods and means for picking up light output emission of the LEDs.

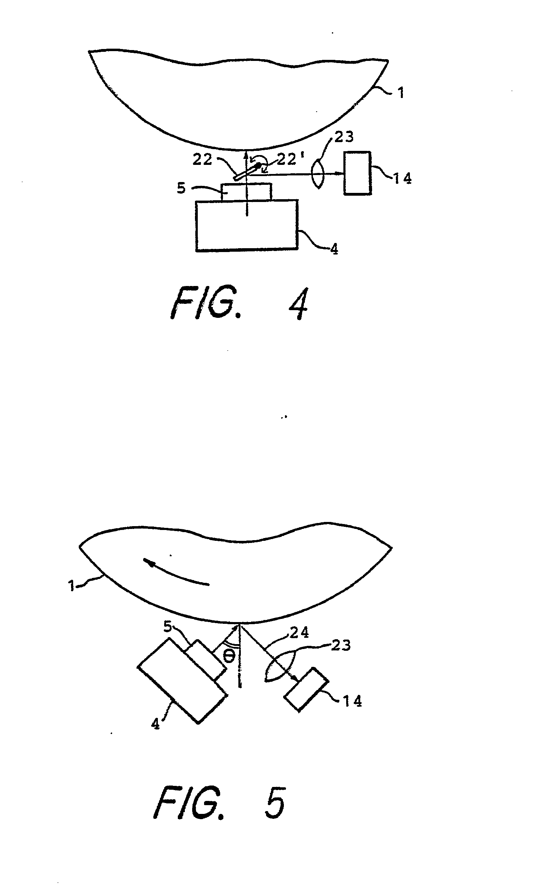

Fig. 4 illustrates a first method and means for picking up the light emission. The Figure shows schematically, in cross-section, relevant parts of an electronic printer corresponding to Fig. 1. LED array 4 has plurality of LED elements (not shown) arranged vertically with respect to the plane of the Figure. Light emitted by the LEDs (shown by arrows) is focused by a self-focusing lens 5 on to the photoconductor 1 on a drum. In the light path from the LED to the photoconductor 1 there is provided a half-mirror 22, which reflects a fractional part of the incident light but transmits the rest of the light. The transmitted light operates to provide image projection as in an ordinary electronic printer. The reflected light is focused by a lens 23 on to photoelectric detector 14 which is similar to that described with respect to Fig. 3. In Fig. 4, the photoelectric detector 14 is elongated vertically with respect to the plane of the Figure, and detects light emitted from any of the LEDs which are also aligned vertically with respect to the plane of the Figure. Measurement and feedback of measured data can be accomplished as described above.

With such a configuration, it becomes possible to make measurements without taking the LED array out of the electronic printer. Measurements can be made over a very short time period, for example during sheet feeding for printing a new page. Therefore, it is possible to check and readjust the LED array each time printing of a new page is started, without disturbing the operation of the printer. So, the quality of the output image is improved.

Further, the configuration of Fig. 4 may be modified as follows. The half-mirror 22 may be replaced by a (full) mirror. In this case, the mirror is made to be rotatable around an axis 22' positioned at one end portion of the mirror 22. The axis 22' is vertical to the plane of Fig. 4. When measurement is effected, the mirror 22 is rotated to the position shown in Fig. 4. However, in ordinary printing mode, the mirror is rotated to a position parallel to the light path from the LED element to the photoconductor 1. So, printing is effected without being disturbed by the mirror 22. In this modification, all of the light emitted from the LED elements is used for printing. This may enable the emission levels of the LED elements to be reduced, requiring reduced driving current for the LEDs, with mitigation of the problem of cooling the high-density LED array.

Fig. 5 illustrates a second method and means for picking up emission. The Figure shows part of an electronic printer similar to Fig. 4. In Fig. 5, the LED array 4 and the self-focusing lens 5 are positioned so as to irradiate the photoconductor drum 1 at an angle $\theta$ to a line orthogonal to the surface of the photoconductor 1. By receiving reflected light (designated by arrow 24) from the photoconductor 1, the half mirror used in Fig. 4 has been eliminated.

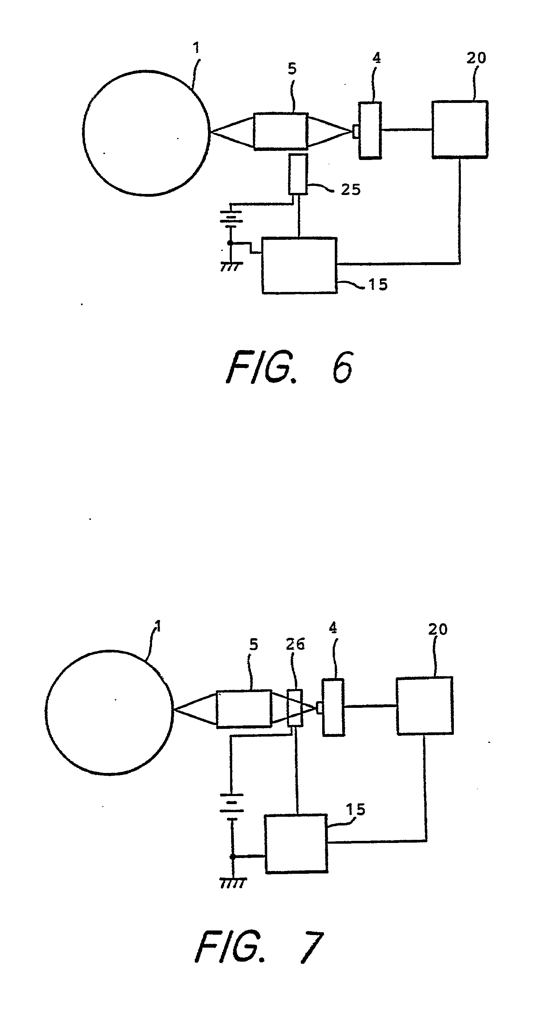

Fig. 6 illustrates a third method and means for picking up emission. In this case, a high sensitivity photoelectric detector 25 is positioned close to the self-focusing lens 5. Not all of the light emitted from the LED is concentrated on the self-focusing lens 5. There is some leakage of light around the self-focusing lens 5. So, if a high-sensitivity detector is used or if the emission intensity of the LED is sufficiently high, a signal proportional to the output emission of the LED is obtained from the high-sensitive photoelectric detector 25. The measuring means 15, and the driving circuit 20 are similar to those of Fig. 2.

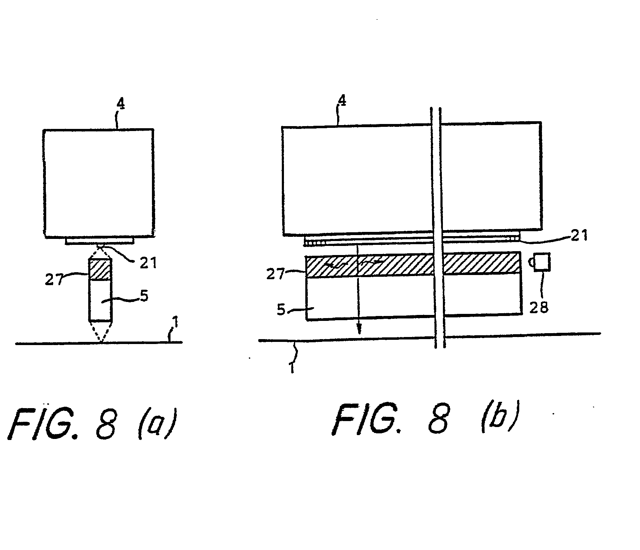

Fig. 7 illustrates a fourth method and means of picking up the light emission. In this case, photoelectric detector 26 is translucent to light emitted from the LEDs. The translucent photoelectric detector 26 is placed on the path of the light from the LED array 4 to the self-focusing lens 5. In other respects, this case is similar to Fig. 6. By using a translucent photoelectric detector, a part of emission from the LEDs is used for electronic printing operation, whilst the remainder of the light, which is absorbed by the detector, is used for checking and feedback.

The structure of the translucent photoelectric detector 26 is similar to that of Fig. 3(c) but the photoconducting layer 18 is a single layer, and both the front and back electrodes 16 and 17a are made from ITO 0.1 μm thick. The back electrode 17a is plated on a glass substrate 17b. The photoconducting layer 18 is a single layer of arsenic selenide ($As_2Se_3$) 2 μm thick, which is formed on the back electrode 17a by a vacuum evaporation. An exemplary photoelectric detector fabricated in such a manner has a maximum sensitivity at a wavelength of 670 nm for light emitted from the LEDs, and transparency was about 50%. Therefore, this photoelectric detector can be used equivalently to the half-mirror 22 in Fig. 4.

Fig. 8 shows another method and means of picking up the emission from the LEDs, using a light conducting fiber. The light conducting fiber used in this case is called a Fluorescent Optical Fiber FFO and is marketed by Fujitsu. The Fluorescence Optical Fiber FFO is made of polycarbonate resin containing an organic fluorescent material such as perylene. If light is incident on a side of this optical fiber, the fluorescent material radiates light, and this light is transmitted through the fiber. Therefore, incidental light from a side of the fiber is detected at the end of the fluorescent optical fiber. Further details of Fluorescent Optical Fibers are disclosed in Japanese Patent Application 62-052771.

Fig. 8(a) is a schematic front view and Fig. 8(b) is a side view illustrating the arrangement employed in this case. The LED array 4 has plurality of LED elements 21. The FFO is positioned between the LED elements 21 and the self-focusing lens 5. Most of the incidental light from tho LED elements 21 penetrates through the FFO, and focused by a self-focusing lens 5 on the photoconducting material 1. A fractional part of the light excites the fluorescent material in the FFO, and the radiated fluorescent light is transmitted along the FFO 27, and detected by a photodetector 28 positioned at one end of the FFO 28. With this arrangement it is possible to use any conventional photodetector.

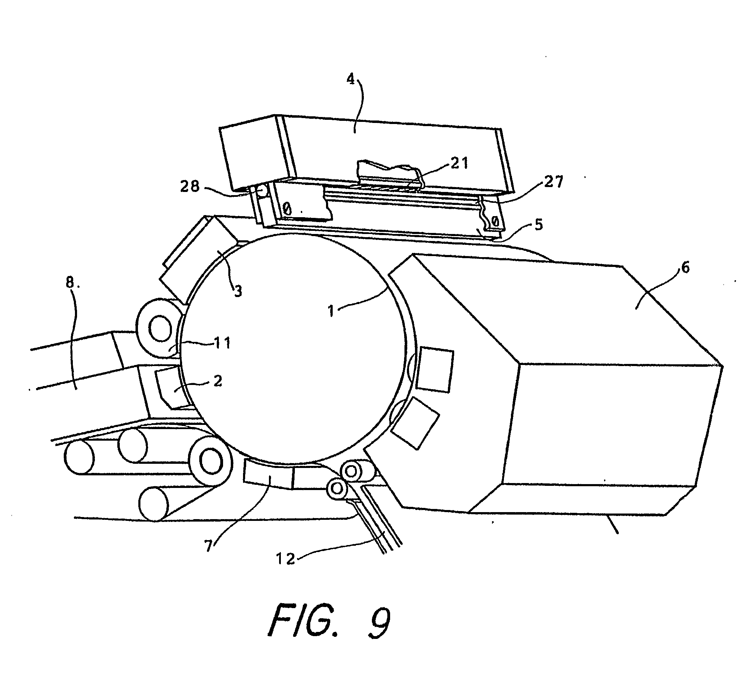

Next, regulation of the array to improve the uniformity of output emission from all of the LED elements will be described. Fig. 9 is a partial cut-away view illustrating configuration and positioning of major parts of an electronic printer to which an embodiment of the present invention is applied. Fig. 9 illustrates means of picking up light from the LEDs in accordance with the arrangement of Fig. 8. Around a drum of photoconductor 1 there are positioned discharger 2, cleaner 11, precharger 3, LED array 4, self-focusing lens array 5, developer 6, transfer charger 7, and a fuser 8. The supporting means for supporting the illustrated parts, and wiring for those parts, are omitted for simplicity. A latent image on the photoconductor 1 is developed by the developer 6 and transferred to paper 12, and fixed on the paper by the fuser 8.

In Fig. 9, fluorescent optical fiber FFO 27 is positioned between the LED elements 21 and the self-focusing lens 5. At one end of the FFO 27 is positioned a photodetector 28. It will be apparent for one skilled in the art that the configuration and positioning of parts for other embodiments described above can be easily understood from this Figure. For example, if the FFO 27 is replaced by half-mirror 22 or a translucent photoelectric detector 26, arrangements in accordance with Fig. 4 or Fig. 7 are provided.

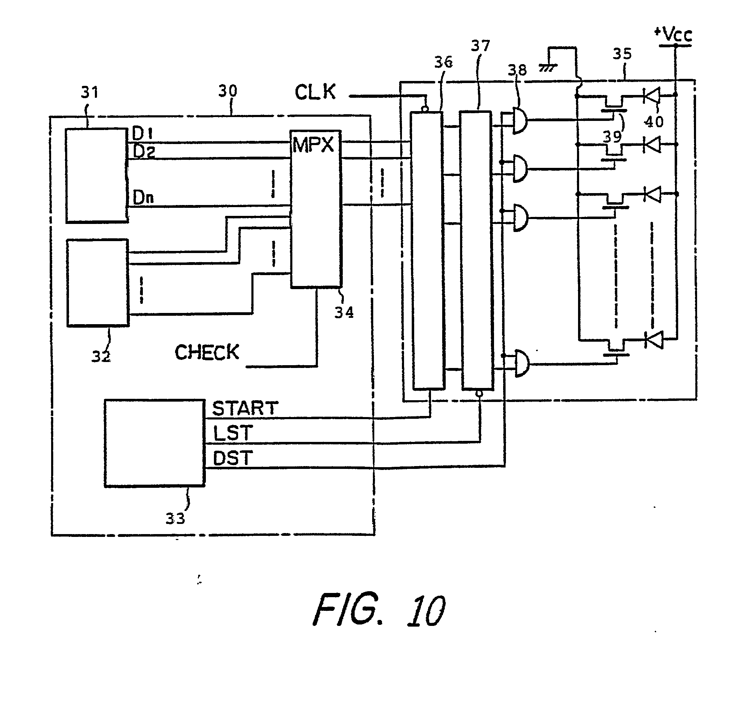

Fig. 10 is a schematic circuit diagram of circuitry used for checking and regulating an LED array in accordance with an embodiment of the present invention. The circuit comprises a driving part 30 which controls the operation of the LED elements, and an array part 35 which is installed in the array head 4 in Fig. 9. The driving part 30 includes a video signal generator 31, a test signal generator 32, a control unit 33 and a multiplexer 34.

The video signal generator 31 generates binary video signals D1 - Dn which correspond to respective LED elements of which the total number is n. According to these binary signals the LED elements are excited. Namely, when a signal is 1, the corresponding LED radiates, and when the signal is 0, the LED is not excited. So, according to the video signals, the LED array emits light to generate an image on the photoconductor 1. The video signal generator 31 is conventional, as found in ordinary electronic printers.

The test signal generator 32 generates a test signal for each of the LED elements to make them radiate light in turn, one by one. The multiplexer 34 receives both video signals and the test signals and selects either video or test signals, depending on a check signal (CHECK), and outputs the selection.

Operation of the circuitry in printing mode is as follows. First, the control unit 33 outputs a start signal (START) (the CHECK signal is "0") and the multiplexor 34 outputs video signals to the array part 35. The array part 35 comprises a first register 36 which latches the input video signal data corresponding to one line element of the image; that is, to dots aligned on one line of the image. CLK is a clock signal. When the line element is stored, the control unit 32 outputs a latch strobe signal (LST), and the data in the first register 36 is transferred to the second register 37. So, the first register 36 can accept the data for a second line element, whilst the second register 37 is processing the data for the first line element. Then the control unit 33 outputs a data strobe signal (DST). By this signal, data values "1" stored in the second register 37 are sent out through AND gates 36 and open corresponding FET (field effect transistor) gates 39. So, current from a voltage source Vcc runs through the corresponding LED elements 40, and the line image is projected on to a photoconductor drum (not shown). These operations are conventional, so further description on the circuit and the circuit elements is omitted.

In the checking mode, the operation of the circuit is as follows. The check signal becomes "1", and the multiplexer 34 switches its output from video signals to the test signals generated by the test signal generator 32, and sends them to the first register 36.

The test signal generator 32 is a data generator which outputs data to excite the LEDs one by one in a predetermined order. Such data may be obtained in various ways. The simplest way may be to provide the test signal generator with a ROM (read only memory) device having n x n matrix memory, where n is the number of the LED elements. In the diagonal elements of the matrix are stored "1", whilst the remaining memory matrix elements store "0". Therefore, the first row of the matrix is "10000...", the second row is "01000..", and so on, and the n-th row is "0000...1". Such test data may be obtained in various other ways, for example a combination of ROM of n memory and a shift resistor (a linear n-bit ROM and a shift register).

The test data is processed by the array part 35 in the same manner described above, so the LEDs are excited one by one. Accordingly, if the output of the LED array is detected by any of the methods and means described above, the detected signal becomes a burst of pulses. Each of the pulses corresponds to the output of a respective LED element, and represents the emission characteristic of that element. From these output pulses, it is possible to recognise degradation of individual elements, and/or it is possible to feed back this check data to improve the uniformity of the LED array.

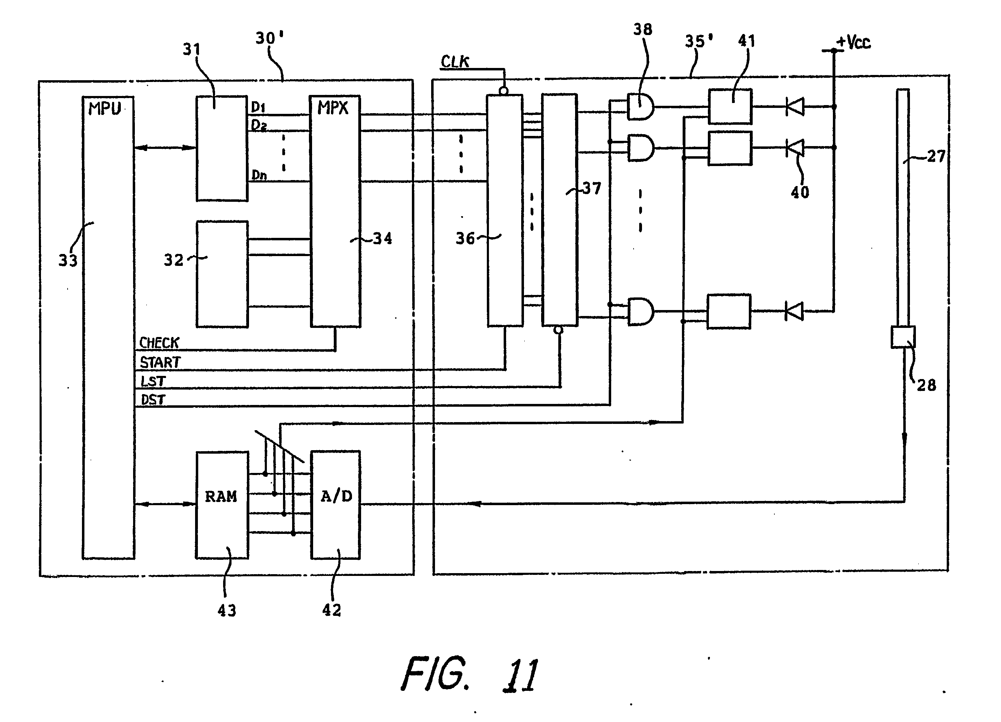

Fig. 11 is a circuit diagram illustrating circuitry for feeding back the check data to improve the uniformity of the emission characteristics of an LED array, to improve the quality of the image obtained using the LED array. Compared with the circuit of Fig. 10, the array part 35' of Fig. 11 comprises a digital controlled amplifier 41, instead of the FET gates 39. In this Figure, a fluorescent optical fiber FFO 27 and a photodetector 28, as in the embodiment of Fig. 9, are shown. It will be apparent that these items can be replaced by other photodetector means and arrangements, for example as described above. In the checking mode, the photodetector 28 sends out a detected pulse burst to driving part 30'.

The driving part 30' is provided with an analog-digital (A/D) converter 42, which converts pulse height into a four-bit digital signal. The pulse height signals are memorized in an emission memory 43 as emission data. The emission memory 43 is a random access memory (RAM/ROM) device. In the printing mode, the emission data is taken out from the emission memory 43 and fed to respective digital-controlled amplifiers 41 provided for each of the LED elements 40. The gains of the digital-controlled amplifiers 41 are controlled by the emission data so as to compensate for variations, to maintain tolerances and to equalize emission from each of the LED elements.

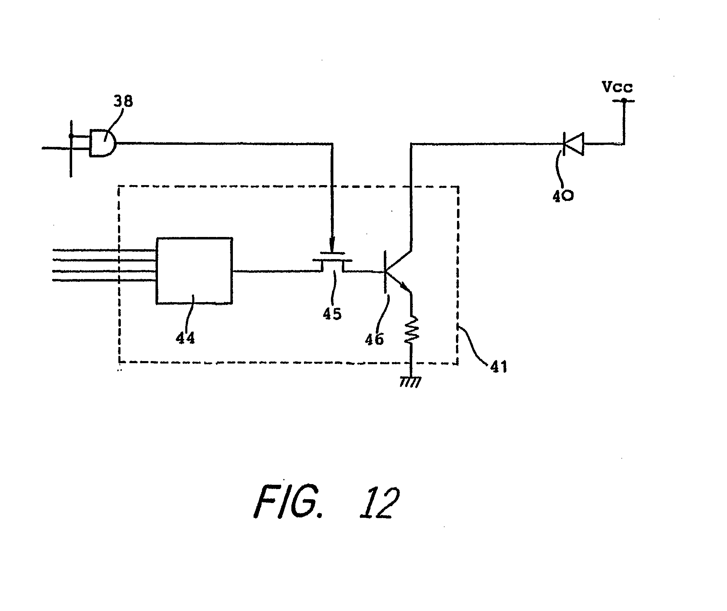

An example of a digital-controlled amplifier applicable to such purpose is shown in Fig. 12. Emission data is converted into an analog value by a digital-analog (D/A) converter 44 and fed to an FET 45, the gate of which is controlled by the output signal of an AND gate 38. The FET 45 is connected to the base of a bipolar transistor 46 connected in series with an LED element 40. Therefore, when the gate of the FET 45 is driven to energize the LED element, the internal conductance of the bipolar transistor 46 is varied according to the emission data. The bipolar transistor operates as a series resistance for the LED element 40. When the output pulse of the LED in the checking mode is large, the emission data is large, this leads to an increase in the internal resistance value of the bipolar transistor 46, and thus to an increase in the equivalent series resistance of the LED element 40, so the light emission of the LED element is decreased. In such a manner, emissions from all of the LED elements are homogenized.

Operation in printing and checking modes is controlled by control unit 33. Usually, once checking is effected, and the emission data is stored in the emission memory, it is not replaced with new data unless some change occurs in the LED array. In other words, the replacement of the emission data means some change has occurred in the LED array. Therefore, it is possible to provide the control unit 23 with a function to output an alarm signal if it detects a change in the emission data exceeding a predetermined value. This makes the maintenance of the electronic printer easy. It also enables the end of the life of the array to be forecast and enables replacement of elements before failure. This increases the reliability of the electronic printer.

In the above description reference has been made particularly to LED arrays, but it will be clear that embodiments of the present invention can be applied to other types of arrays, such as laser diode arrays, liquid crystal shutter arrays combined with light sources. Further, embodiments of the present invention may be two-dimensional arrangements of the light emission devices.

An embodiment of the invention provides a checking method for a device having a plurality of light emitting or light emission control elements, for example an LED array installed in electronic printing equipment. The check is carried out while the LED array is mounted in the equipment without need to take out the array. The check is done in a short time period, so it can be effected during a page feed period of the printer, for example, without disturbing operation of the printer. Each LED is lighted in turn, one by one, with a driving pulse. The output emission of the array is detected by a photoelectric detector which is devised and positioned to detect the emission from any LED of the array. The output of the detector becomes a burst of pulses, each of the pulses representing the emission property of a corresponding LED. The pulses are converted into digital signals and memorized in a RAM as emission data. The emission data is fed back to an LED driver to compensate for variation in the emission characteristics of the LEDs. This improves the uniformity of the output image of the electronic printer. With each check, the RAM is rewritten. A change of emission data indicates a change or degradation of the LEDs. This enables forecasting of the end of the lifetime of the LED array, and maintenance of the printer becomes easy.

An embodiment of the present invention provides a method for checking a light emitting device having plurality of light emitting elements without taking away said light emitting device out of an equipment using said light emitting device, said equipment having a driving means to drive each of said light emitting elements and a target to be irradiated by the radiation from said light emitting elements, said method comprising the process of:

making all of said light emitting elements generate emission one by one with a pulse;

detecting said emission with a detecting means which is devised to detect the emission from any of said light emitting elements, and output a signal proportional to the intensity of incidental emission to said detecting means; and

processing said output signal of said detecting means to obtain an emission data representing emission property corresponding to each of said light emitting elements.

An embodiment of the invention provides a means for checking a light emitting device having plurality of light emitting elements without taking away said light emitting device out of an equipment using said light emitting device, said equipment having a driving means to drive each of said light emitting elements and a target to be irradiated by the radiation from said light emitting elements, said means comprising:

a test generator means for making all of said light emitting elements generate emission one by one as a pulse;

a detecting means which is devised to detect the emission from any of said light emitting elements, and outputs a signal proportional to the intensity of incidental emission to said detecting means; and a processing means for processing said output signal of said detecting means to obtain an emission data representing emission property corresponding to each of said light emitting elements.

## Claims

1. Apparatus including:a light emission arrangement (4, 13), comprising a plurality of elements (21) each operable to provide for controlled light emission; driving means (20, 35), for driving each of the plurality of elements (21), to provide controlled light emission; a target object (1), towards which light emission is directed; and means for checking the functioning of the elements of the plurality in situ, comprising: a test generator (30, 32), operable to generate pulses for causing all of the elements (21) of the plurality to provide light emissions, one by one, each element in turn, detector means (14; 25; 28), operable to detect light emissions provided from any of the elements of the plurality and to provide output signals dependent upon the intensities of the detected emissions, and processing means (30', 42, 43, 33), operable to process output signals from the detector means to provide data representing functional characteristics of each of the elements of the plurality, characterised in that the detector means (14; 25; 28) are positioned outside of the path of light emission from the light emission arrangement (4, 13) to the target object (1).

2. Apparatus as claimed in claim 1, further comprising optical means (22; 22'; 23; 27) operable to provide that at least a part of light emission from the light emission arrangement is directed to the detector means (14; 25; 28).

3. Apparatus as claimed in claim 2, wherein the optical means comprise a half-mirror (22) positioned in a light path from the light emission arrangement (4) to the target object (1), and the detector means comprise a photoelectric detector (14) positioned to receive Light reflected from said half-mirror.

4. Apparatus as claimed in claim. 2, wherein the optical means comprise a fluorescent optical fiber (27) positioned in a light path from the light emission arrangement (4) to the target object (1), and the detector means comprise a photoelectric detector (28) positioned at an end of the fluorescent optical fiber (27) for detecting light transmitted through the fluorescent optical fiber.

5. Apparatus as claimed in claim 1, wherein the detector means (14) are arranged to detect light reflected from the target object (1).

6. Apparatus as claimed in claim 1, wherein the detector means (27) are positioned to detect light leaking from the light path from the light emission arrangement (4) to the target object (1).

7. Apparatus including: a light emission arrangement (4, 13), comprising a plurality of elements (21) each operable to provide for controlled light emission; driving means (20, 35), for driving each of the plurality of elements (21) to provide controlled light emission; a target object (1), towards which light emission is directed; and means for checking the functioning of the elements of the plurality in situ, comprising: a test generator (30, 32), operable to generate pulses for causing all of the elements (21) of the plurality to provide light emissions; one by one, each element in turn, detector means (14; 25; 28; 26), operable to detect light emissions provided from any of the elements of the plurality and to provide output signals dependent upon the intensities of the detected emissions, and processing means (30', 42, 43, 33), operable to process output signals from the detector means to provide data representing functional characteristics of each of the elements of the plurality, characterised in that the detector means (26) are translucent and that light in the path of light emission from the light emission arrangement (4, 13) to the target object (1) passes through the detector means.

8. Apparatus as claimed in claim 7, wherein a self-focussing lens (5) is disposed between the light emission arrangement (4) and the target object (1), and the detector means (26) are positioned between the light emission arrangement (4) and the self-focussing lens (5).

9. Apparatus as claimed in any preceding claim, further including feedback means, operable to feed back the said data to the driving means (20) thereby to compensate for variations of light emission intensities to maintain the intensities within tolerances.

10. Apparatus as claimed in any preceding claim, wherein the said plurality of elements (21) of the light emission arrangement (4, 13) are light emitting diodes in an array, or laser diodes in an array, or are liquid crystal shutters in an array, in which latter case the light emission arrangement further includes a light source.

11. Apparatus as claimed in any preceding claim, being an electronic printer.

12. Apparatus as claimed in any preceding claim, wherein the detector means (14; 25; 28; 26) comprise a photoelectric detector having size and shape or field of view adequate to cover the light emission surfaces of all the elements of the light emission arrangement.

13. Apparatus as claimed in any preceding claim, wherein the test generator (30, 32) comprises a ROM (read only memory) device which has a matrix of address locations, locations across a diagonal of the matrix storing "1", other locations storing "0".

14. Apparatus as claimed in any preceding claim, wherein the processing means comprises: an analog-digital converter (42) for converting output signals from the detector means (14; 25; 28; 26) into digital signals; RAM (random access memory) means (43) operable to store the digital signals as the said data; and the driving means (30, 32) comprising digitalcontrolled amplifiers (41, 44, 45, 38, 46) arranged for driving respective elements (40) of the plurality and such that the internal resistance of each amplifier (41, 44, 45, 38, 46) is controlled in dependence upon the said data.

15. A method of checking the functioning of a plurality of elements (21) of a light emission arrangement (4, 13), each element operable to provide for light emission, with the light emission arrange ment in situ in equipment in which it is employed, the equipment having driving means (20, 35), for driving each of the plurality of elements (21), to provide controlled light emission directed towards a target object (1), the method comprising: causing all the elements (21) of the plurality to provide light emissions one by one, in turn, detecting the light emissions by means of a detector (14; 25; 28) operable to detect light emissions provided from any of the elements of the plurality and to provide output signals dependent upon the intensities of the detected emissions, and processing the output signals to provide data processing functional characteristics of each of the elements (21) of the plurality, characterised in that the detection of the ight emissions is accomplished with the detector (14; 25; 28) positioned outside of the path of light emission from the light emission arrangement to the target object (1).

16. A method as claimed in claim 15, wherein the detection of the light emissions is accomplished through optical means (22; 22', 23, 27) directing at least a part of the light emission from the light emission arrangement towards the detector (14; 25; 28).

17. A method as claimed in claim 15 or 16, further comprising a feedback process whereby the said data is fed back to the driving means (20, 35) to compensate for variations of light emission intensities to maintain the intensities within tolerances.

18. A method as claimed in claim 15, 16 or 17, carried out using apparatus as claimed in any of claims 1 to 6.

**Revendications**

1. Appareil comprenant : un arrangement d'émission de lumière (4, 13) comprenant plusieurs éléments (21) destinés chacun à assurer une émission réglée de lumière, un dispositif (20, 35) de pilotage de chacun des éléments (21) de l'ensemble afin que l'émission lumineuse soit réglée, un objet cible (1) vers lequel la lumière émise est dirigée, et un dispositif de vérification du fonctionnement des éléments de l'ensemble, sur place, ce dispositif comprenant: un générateur de test (30, 32) destiné à créer des impulsions qui provoquent la création d'émission de lumière par tous les éléments (21) de l'ensemble, un par un et chaque élément à son tour, un dispositif détecteur (14; 25; 28) destiné à détecter les émissions lumineuses de n'importe quel élément de l'ensemble et à créer des signaux de sortie dépendant des intensités des émissions détectées, et un dispositif de traitement (30', 42, 43, 33) destiné à traiter les signaux de sortie du dispositif détecteur et à former des données représentant des caractéristiques de fonctionnement de chacun des éléments de l'ensemble, caractérisé en ce que le dispositif détecteur (14; 25; 28) est placé en dehors du trajet de l'émission lumineuse de l'arrangement (4, 13) d'émission lumineuse vers l'objet cible (1).

2. Appareil selon la revendication 1, comprenant en outre un dispositif optique (22; 22'; 23; 27) destiné à assurer la transmission d'une partie au moins de la lumière émise par l'arrangement d'émission de lumière sur le dispositif détecteur (14; 25; 28).

3. Appareil selon la revendication 2, dans lequel le dispositif optique comprend un miroir semi-transparent (22) placé sur le trajet de la lumière compris entre l'arrangement (4) d'émission de lumière et l'objet cible (1), et le dispositif détecteur comprend un détecteur photoélectrique (14) disposé afin qu'il reçoive la lumière réfléchie par le miroir semi-transparent.

4. Appareil selon la revendication 2, dans lequel le dispositif optique comprend une fibre optique fluorescente (27) placée sur le trajet de la lumière entre l'arrangement (44) d'émission de lumière et l'objet cible (1), et le dispositif détecteur comprend un détecteur photoélectrique (28) placé à une extrémité de la fibre optique fluorescents (27) et destiné à détecter la lumière transmise par la fibre optique fluorescente.

5. Appareil selon la revendication 1, dans lequel le dispositif détecteur (14) est destiné à détecter la lumière réfléchie par l'objet cible (1).

6. Appareil selon la revendication 1, dans lequel le dispositif détecteur (27) est disposé afin qu'il détecte là lumière des fuites du trajet lumineux formé entre l'arrangement (4) d'émission de lumière et l'objet cible (1).

7. Appareil comprenant: un arrangement (4, 13) d'émission de lumière comprenant plusieurs éléments (21) destinés chacun à assurer une émission réglée de lumière, un dispositif de pilotage (20, 35) destiné à piloter chacun des éléments (21) de l'ensemble afin qu'il ait une émission réglée de lumière, un objet cible (1) vers lequel la lumière émise est dirigée, et un dispositif de vérification du fonctionnement des éléments de l'ensemble, sur place, comprenant: un générateur de test (30, 32) destiné à créer des impulsions qui provoquent l'émission de lumière par tous les éléments (21) de l'ensemble, un par un et chaque élément à son tour, un dispositif détecteur (14; 25; 28; 26) destiné à détecter la lumière émise provenant de tous les éléments de l'ensemble et à transmettre des signaux de sortie qui dépendent des intensités des émissions détectées, et un dispositif (30', 42, 43, 33) de traitement des signaux de sortie du dispositif détecteur, destiné à former des données représentant des caractéristiques de fonctionnement de chacun des éléments de l'ensemble, caractérisé en ce que le dispositif détecteur (26) est translucide et en ce que la lumière, sur le trajet de l'émission lumineuse de l'arrangement (4, 13) d'émission de lumière à l'objet cible (1), passe à travers le dispositif détecteur.

8. Appareil selon la revendication 7, dans lequel une lentille (5) de focalisation automatique est placée entre l'arrangement (4) d'émission de lumière et l'objet cible (1), et le dispositif détecteur (26) est placé entre l'arrangement (4) d'émission de lumière et la lentille (5).

9. Appareil selon l'une quelconque des revendications précédentes, comprenant en outre un dispositif de rétroaction destiné à renvoyer les données au dispositif de pilotage (20) et à compenser ainsi les variations des intensités des lumières émises de manière que ces intensités restent dans une plage de tolérances.

10. Appareil selon l'une quelconque des revendications précédentes, dans lequel les éléments (21) de l'arrangement (4, 13) d'émission de lumière sont des diodes photoémissives disposées suivant une matrice, ou des diodes lasers disposées suivant une matrice, ou des obturateurs à cristaux liquides disposés suivant une matrice, et dans ce dernier cas, l'arrangement d'émission de lumière comporte en outre une source lumineuse.

11. Appareil selon l'une quelconque des revendications précédentes, constituant une imprimante électronique.

12. Appareil selon l'une quelconque des revendications précédentes, caractérisé en ce que le dispositif détecteur (14; 25; 28; 26) est un détecteur photoélectrique ayant une dimension et une configuration ou un champ de vision permettant de couvrir les surfaces photoémissives de tous les éléments de l'arrangement d'émission de lumière.

13. Appareil selon l'une quelconque des revendications précédentes, dans lequel le générateur de test (30, 32) comporte une mémoire morte qui a une matrice d'emplacements d'adresses, les emplacements disposés suivant une diagonale de la matrice contenant des "1" alors que les autres emplacements contiennent des "0".

14. Appareil selon l'une quelconque des revendications précédentes, dans lequel le dispositif de traitement comprend: un convertisseur analogique-numérique (42) destiné à transformer les signaux de sortie du dispositif détecteur (14; 25; 28; 26) en signaux numériques, une mémoire à accès direct (43) destinée à conserver les signaux numériques sous forme desdites données, et le dispositif de pilotage (30; 32) comprend des amplificateurs à commande numérique (41, 44, 45, 38, 46) disposés de manière qu'ils pilotent les éléments respectifs (40) de l'ensemble et de manière que la résistance interne de chaque amplificateur (41, 44, 45, 38, 46) soit réglée en fonction de ces données.

15. Procédé de vérification du fonctionnement de plusieurs éléments (21) d'un arrangement d'émission de lumière (4, 13), chaque élément étant destiné à assurer une émission de lumière, alors que l'arrangement est en place dans l'appareillage dans lequel il est utilisé, l'appareillage ayant un dispositif (20, 35) de pilotage de chacun des éléments (21) de l'ensemble afin qu'une émission réglée de lumière soit dirigée vers un objet cible (1), le procédé comprenant: l'émission de lumière par tous les éléments (21) de l'ensemble, un par un, tour à tour, la détection des émissions de lumière à l'aide d'un détecteur (14; 25; 28) destiné à détecter la lumière émise par l'un quelconque des éléments de l'ensemble et à former des signaux de sortie qui dépendent des intensités des émissions détectées, et le traitement des signaux de sortie afin que des données représentatives des caractéristiques de fonctionnement de chacun des éléments (21) de l'ensemble soient formées, caractérisé en ce que la détection des émissions de lumière est réalisée avec un détecteur (14; 25; 28) qui est placé en dehors du trajet de l'émission lumineuse de l'arrangement d'émission de lumière vers l'objet cible (1).

16. Procédé selon la revendication 15, dans lequel la détection des émissions de lumière est réalisée à l'aide d'un dispositif optique (22; 22', 23, 27) qui dirige une partie au moins de l'émission lumineuse de l'arrangement vers le détecteur (14; 25; 28).

17. Procédé selon la revendication 15 ou 16, comprenant en outre une opération de rétroaction grâce à laquelle les données sont renvoyées au dispositif de pilotage (20, 35) afin que les variations des intensités des émissions lumineuses soient compensées et maintiennent ces intensités entre des limites de tolérances.

18. Procédé selon la revendication 15, 16 ou 17, mis en œuvre avec un appareil selon l'une quelconque des revendications 1 à 6.

**Patentansprüche**

1. Vorrichtung mit:einer Lichtemissionsanordnung (4, 13), die eine Vielzahl von Elementen (21) umfaßt, die jeweils betreibbar sind, um die gesteuerte Lichtemission zu liefern; Treibereinrichtungen (20, 35), um jede der Vielzahl von Elementen (21) zu treiben, um die gesteuerte Lichtemission zu liefern; einem Zielobjekt (1), auf welches die Lichtemission gerichtet wird; und Einrichtungen zum Prüfen des Funktionierens der Elemente der Vielzahl in situ, mit:einem Testgenerator (30, 32), der betreibbar ist, um Impulse zu erzeugen, um alle Elemente (21) der Vielzahl zu veranlassen, Lichtemissionen zu liefern, eine nach der anderen, jedes Element der Reihe nach, Detektoreinrichtungen (14; 25; 28), die betreibbar sind, um Lichtemissionen von irgendeinem der Elemente der Vielzahl zu detektieren und Ausgangssignale zu liefern, die von den Intensitäten der detektierten Emissionen abhängen, und Verarbeitungseinrichtungen (30', 42, 43, 33), die betreibbar sind, um Ausgangssignale von der Detektoreinrichtung zu verarbeiten, um Daten zu liefern, welche die funktionalen Charakteristiken von jedem der Elemente von der genannten Vielzahl darstellen, dadurch gekennzeichnet, daß die Detektoreinrichtungen (14; 25; 28) außerhalb des Weges der Lichtemission von der Lichtemissionsanordnung (4, 13) zu dem Zielobjekt (1) angeordnet sind.

2. Vorrichtung nach Anspruch 1, ferner mit optischen Einrichtungen (22; 22'; 23; 27), die betreibbar sind, um vorzusehen, daß wenigstens ein Teil der Lichtemission von der Lichtemissionsanordnung zu der Detektoreinrichtung (14; 25; 28) gerichtet wird.

3. Vorrichtung nach Anspruch 2, bei der die optische Einrichtung einen Halbspiegel (22) umfaßt, der in einem Lichtweg von der Lichtemissionsanordnung (4) zu dem Zielobjekt (1) angeordnet ist, und die Detektoreinrichtung einen photoelektrischen Detektor (14) umfaßt, der angeordnet ist, um von dem genannten Halbspiegel reflektiertes Licht zu empfangen.

4. Vorrichtung nach Anspruch 2, bei der die optische Einrichtung eine fluoreszierende optische Faser (27) umfaßt, die in einem Lichtweg von der Lichtemissionsanordnung (4) zu dem Zielobjekt (1) angeordnet ist, und die Detektoreinrichtung einen photoelektrischen Detektor (28) umfaßt, der an einem Ende der fluoreszierenden optischen Faser (27) angeordnet ist, um Licht zu detektieren, welches über die fluoreszierende optische Faser übertragen wird.

5. Vorrichtung nach Anspruch 1, bei der die Detektoreinrichtung (14) angeordnet ist, um Licht, welches von dem Zielobjekt (1) reflektiert wird, zu detektieren.

6. Vorrichtung nach Anspruch 1, bei der die Detektoreinrichtung (27) angeordnet ist, um Licht zu detektieren, welches von dem Lichtweg von der Lichtemissionsanordnung (4) zu dem Zielobjekt (1) ausleckt.

7. Vorrichtung mit einer Lichtemissionsanordnung (4, 13), die eine Vielzahl von Elementen (21) umfaßt, die jeweils betreibbar sind, um eine gesteuerte Lichtemission zu liefern; Treibereinrichtungen (20, 35), um jede von der Vielzahl von Elementen (21) zu treiben, um eine gesteuerte Lichtemission zu liefern; einem Zielobjekt (1), auf welches die Lichtemission gerichtet ist; und Einrichtungen zum Prüfen des Funktionierens der Elemente der Vielzahl in situ, mit: einem Testgenerator (30, 32), der betreibbar ist, um Impulse zu erzeugen, um alle Elemente (21) von der Vielzahl zu veranlassen, Lichtemissionen zu liefern, eine nach der anderen, jedes Element der Reihe nach, Detektoreinrichtungen (14; 25; 28; 26), die betreibbar sind, um Lichtemissionen zu detektieren, die von irgendeinem der Elemente von der genannten Vielzahl geliefert werden und um Ausgangssignale zu erzeugen, die von den Intensitäten der detektierten Emissionen abhängen, und Verarbeitungseinrichtungen (30', 42, 43, 33), die betreibbar sind, um Ausgangssignale von der Detektoreinrichtung zu verarbeiten, um Daten zu liefern, welche die funktionalen Charakteristiken von jedem der Elemente von der genannten Vielzahl darstellen, dadurch gekennzeichnet, daß die Detektoreinrichtungen (26) transparent sind und daß Licht in dem Weg der Lichtemission von der Lichtemissionsanordnung (4, 13) zu dem Zielobjekt (1) durch die Detektoreinrichtungen hindurchtritt.

8. Vorrichtung nach Anspruch 7, bei der eine selbstfokussierende Linse (5) zwischen der Lichtemissionsanordnung (4) und dem Zielobjekt (1) angeordnet ist, und die Detektoreinrichtungen (26) zwischen der Lichtemissionsanordnung (4) und der selbstfokussierenden Linse (5) angeordnet sind.

9. Vorrichtung nach einem der vorhergehenden Ansprüche, ferner mit Rückkopplungseinrichtungen, die betreibbar ist, um die genannten Daten zu den Treibereinrichtungen (20) zurückzuführen, um dadurch Variationen der Lichtemissionsintensitäten zu kompensieren, um die Intensitäten innerhalb von Toleranzen zu halten.

10. Vorrichtung nach einem der vorhergehenden Ansprüche, bei der die genannte Vielzahl von Elementen (21) von der Lichtemissionsanordnung (4, 13) Licht emittierende Dioden in einer Gruppierung sind, oder Laserdioden in einer Gruppierung, oder Flüssigkristallverschlüsse in einer Gruppierung sind, in welch letzterem Falle die Lichtemissionsanordnung ferner eine Lichtquelle umfaßt.

11. Vorrichtung nach einem der vorhergehenden Ansprüche, bei der diese ein elektronischer Drucker ist.

12. Vorrichtung nach einem der vorhergehenden Ansprüche, bei der die Detektoreinrichtungen (14; 25; 28; 26) einen photoelektrischen Detektor umfassen, der Größe und Form oder Gesichtsfeld hat, die adäquat sind, um die Lichtemissionsoberfläche von allen Elementen der Lichtemissionsanordnung abzudecken.

13. Vorrichtung nach einem der vorhergehenden Ansprüche, bei der der Testgenerator (30, 32) eine ROM-(Festwertspeicher)-Vorrichtung umfaßt, die eine Matrix von Adreßorten hat, wobei Orte quer über eine Diagonale der Matrix "1" speichern und andere Orte "0" speichern.

14. Vorrichtung nach einem der vorhergehenden Ansprüche, bei der die Verarbeitungseinrichtungen umfassen: einen Analog/Digital-Konverter (42) zum Konvertieren von Ausgangssignalen von den Detektoreinrichtungen (14; 25; 28; 26) in digitale Signale; RAM-(Speicher mit wahlfreiem Zugriff)-Einrichtungen (43), die betreibbar sind, um die digitalen Signale als die genannten Daten zu speichern; und Treibereinrichtungen (30, 32), die digital gesteuerte Verstärker (41, 44, 45, 38, 46) umfassen, die angeordnet sind, um entsprechende Elemente (40) von der Vielzahl zu treiben und so, daß der interne Widerstand von jedem Verstärker (41, 44, 45, 38, 46) in Abhängigkeit von den genannten Daten gesteuert wird.

15. Verfahren zum Prüfen des Funktionierens von einer Vielzahl von Elementen (21) von einer Lichtemissionsanordnung (4, 13), von der jedes Element betreibbar ist, um Lichtemission zu liefern, mit der Lichtemissionsanordnung in situ in der Einrichtung, in der sie verwendet wird, welche Einrichtung Treibereinrichtungen (20, 35) hat, um jedes der Vielzahl von Elementen (21) zu treiben, um eine gesteuerte Lichtemission zu liefern, die auf ein Zielobjekt (1) gerichtet ist, welches Verfahren umfaßt: Veranlassen aller Elemente (21) von der genannten Vielzahl, damit sie Lichtemissionen liefern, eine nach der anderen, der Reihe nach, Detektieren der Lichtemission mittels eines Detektors (14; 25; 28), der betreibbar ist, um Lichtemissionen zu detektieren, welche von irgendeinem der Elemente von der genannten Vielzahl geliefert werden, und um Ausgangssignale zu liefern, die von den Intensitäten der detektierten Emissionen abhängen, und Verarbeiten der Ausgangssignale, um Daten zu liefern, welche die funktionalen Charakteristiken von jedem der Elemente (21) von der genannten Vielzahl darstellen, dadurch gekennzeichnet, daß die Detektion der Lichtemissionen mit dem Detektor (14; 25; 28) erreicht wird, der außerhalb des Weges der Lichtemission von der Lichtemissionsanordnung zu dem Zielobjekt (1) angeordnet ist.

16. Verfahren nach Anspruch 15, bei dem die Detektion der Lichtemissionen durch optische Einrichtungen (22; 22', 23, 27) erreicht wird, die wenigstens einen Teil der Lichtemission von der Lichtemissionsanordnung zu dem Detektor (14; 25; 28) richten.

17. Verfahren nach Anspruch 15 oder 16, ferner mit einem Rückkopplungsverfahren, durch welches die genannten Daten zu den Treibereinrichtungen (20, 35) rückgekoppelt werden, um Variationen der Lichtemissionsintensitäten zu kompensieren, um die Intensitäten innerhalb von Toleranzen zu halten.

18. Verfahren nach Anspruch 15, 16 oder 17, welches unter Verwendung einer Vorrichtung nach einem der Ansprüche 1 bis 6 durchgeführt wird.

FIG. 1

FIG. 2

FIG. 3 (a)

FIG. 3 (b)

FIG. 3 (c)

FIG. 4

FIG. 5

EP 0 297 603 B1

FIG. 6

FIG. 7

FIG. 8 (a)

FIG. 8 (b)

FIG. 9

EP 0 297 603 B1

FIG. 10

F/G. 11

FIG. 12

EP 0 297 603 B1